# EUROPÄISCHE PATENTSCHRIFT

(11) **EP 0 756 965 B1**
(45) Veröffentlichungstag und Bekanntmachung des Hinweises auf die Patenterteilung: **27.10.1999**
(21) Anmeldenummer: 96110032.8
(22) Anmeldetag: 21.06.1996
(51) Int. Cl.: B60N 3/10

(54) **Halterung für zwei Getränkebehälter**
Support for two beverage containers
Support pour deux récipients de boisson

(30) Priorität: 03.08.1995 DE 19528488
(43) Veröffentlichungstag der Anmeldung: 05.02.1997
(73) Patentinhaber: fischerwerke Artur Fischer GmbH & Co. KG, 72178 Waldachtal (DE); DaimlerChrysler AG, 70567 Stuttgart (DE)
(72) Erfinder: Volkmann, Tilo, 71065 Sindelfingen (DE); Nestler, Christina, 75395 Ostelsheim (DE); Körber, Hans-Jürgen, 71065 Sindelfingen (DE); Plocher, Bernd, 72108 Rottenburg-Seebronn (DE)

(56) Entgegenhaltungen:
- US-A- 1 967 898
- US-A- 5 060 899
- US-A- 5 190 259
- US-A- 5 330 146

## Beschreibung

Die Erfindung betrifft eine Halterung für zwei Getränkebehälter mit den Merkmalen des Oberbegriffs des Anspruchs 1, die zum Einbau in ein Armaturenbrett, eine Armstütze oder dgl. eines Kraftwagens vorgesehen ist.

Eine derartige Halterung ist bekannt aus der Patentschrift US-A-5330146. Die Halterung gemäß US-A-5060899 weist einen schubladenartig ausziehbaren Schieber mit einer Einstellöffnung für einen Getränkebehälter auf. Ein Boden des Schiebers bildet zugleich einen Abstellboden für den Getränkebehälter. Eine Seite des Schiebers ist offen. Am Schieber ist ein Schwenkteil gelagert, das sich zur offenen Seite aus dem Schieber herausschwenken läßt. Das Schwenkte weist eine Einstellöffnung für einen zweiten Getränkebehälter auf, wobei ein Boden des Schwenkteils eine Abstellfläche für den zweiten Getränkebehälter bildet. Es lassen sich also zwei Getränkebehälter wie Getränkebüchsen oder Kaffeetassen in die Halterung einstellen.

Sofern nur ein Getränkebehälter in die bekannte Halterung eingestellt werden soll, kann das Schwenkte in einer in den Schieber eingeschwenkten Stellung verbleiben, in der es mittels einer Verriegelungseinrichtung verriegelt ist. Es befindet sich dann deckungsgleich unter der Einstellöffnung des Schiebers. Eine Mindestbaubreite des Schiebers der bekannten Halterung wird vom Durchmesser des einzustellenden Getränkebehälters zuzüglich einer ausreichenden Wandung auf beiden Seiten der Einstellöffnung vorgegeben.

Aufgabe der Erfindung ist es, eine derartige Halterung schmaler, insbesondere ihren Schieber weniger breit als den Durchmesser der beiden Einstellöffnungen auszubilden, um den erforderlichen Einbauraum für die Halterung zu verkleinern.

Diese Aufgabe wird erfindungsgemäß durch die Merkmale des Anspruchs 1 gelöst. Bei der erfindungsgemäßen Halterung ist die Einstellöffnung des Schiebers unvollständig ausgebildet, es fehlt ein Umfangsabschnitt auf der Seite, zu welcher das Schwenkteil aus dem Schieber herausschwenkbar ist. Bei ausgezogenem Schieber wird die Einstellöffnung von einem seitlich in gleicher Richtung wie das Schwenkte herausschwenkbaren Schwenkarm vervollständigt. Der Schieberläßt sich dadurch schmaler ausbilden als der Durchmesser seiner Einstellöffnung.

Sollen zwei Getränkebehälter in die erfindungsgemäße Halterung eingestellt werden, so wird das Schwenkteil seitlich aus dem Schieber herausgeschwenkt. Der Schwenkarm der in bevorzugter Ausgestaltung der Erfindung am Schwenkteil schwenkbar gelagert ist, schwenkt mit diesem aus dem Schieber heraus und vervollständigt dessen Einstellöffnung. Ein Abschnitt eines Außenrandes des Schwenkteils vervollständigt die Einstellöffnung des Schiebers. Ein in den Schieber eingestellter Getränkebehälter ruht auf dessen Boden. Ein in die Einstellöffnung des Schwenkteils eingestellter Getränkebehälter ruht auf einer mit dem Schwenkteil mitschwenkenden Abstellfläche.

Um auch die erforderliche Bauhöhe der erfindungsgemäßen Halterung zu verringern, ist sie gemäß einer Ausführungsform so ausgebildet, daß sich eine mit dem Schwenkteil mitschwenkende Stütze beim Herausschwenken des Schwenkteils absenkt und beim Einschwenken wieder anhebt. Die Stütze weist die Abstellfläche für den zweiten, in die Einstellöffnung des Schwenkteils einzustellenden Getränkebehälter auf. Auf diese Weise wird ein ausreichender vertikaler Abstand zwischen Abstellfläche und Einstellöffnung erzielt, um einen eingestellten Getränkebehälter sicher zu halten. Bei eingeschwenktem Schwenkteil befindet sich die Stütze in einer Ausnehmung des Abstellbodens des Schiebers. Sie steht nach unten nicht über den Boden des Schiebers vor, erhöht also die Bauhöhe der Halterung nicht.

Das Absenken und Anheben der Stütze erfolgt bei einer erfindungsgemäßen Ausführungsform mittels eines Wendelantriebs.

Bei bevorzugten Ausführungsformen der Erfindung werden mittels Verriegelungseinrichtungen das Schwenkteil in seiner in den Schieber eingeschwenkten Stellung und/oder der Schieber in seiner eingeschobenen Stellung verriegelt. Das Herausbewegen des Schiebers und/oder das Herausschwenken des Schwenkteils und/oder des Schwenkarms erfolgt vorzugsweise mit Federelementen.

Um den Halt eingestellter Getränkebehälter zu verbessern weist eine Ausführungsform der Erfindung Andruckklappen auf, die federbetätigt in die Einstellöffnungen hineingedrückt werden und dadurch eine Anlage eingestellter Getränkebehälter an zumindest zwei einander gegenüberliegenden Abschnitten der jeweiligen Einstellöffnung bewirken.

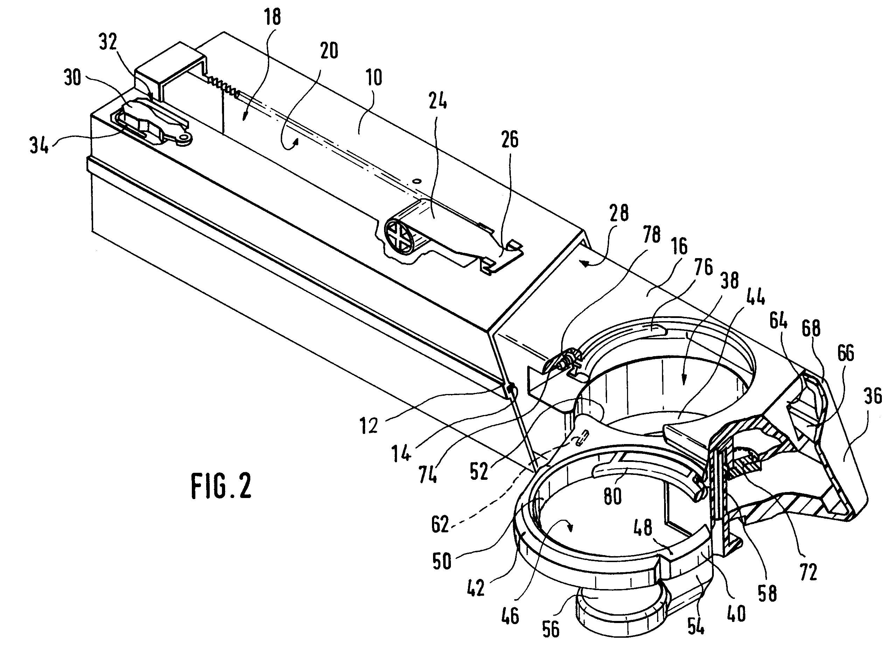

Die Erfindung wird nachfolgend anhand eines in der Zeichnung dargestellten Ausführungsbeispiels näher erläutert. Die beiden Figuren zeigen eine erfindungsgemäße Halterung mit herausgezogenem Schieber, wobei in Figur 2 zusätzlich ein Schwenkteil seitlich aus dem Schieber herausgeschwenkt ist.

Die in der Zeichnung dargestellte erfindungsgemäße Halterung für zwei Getränkebehälter weist ein schachtelförmiges Gehäuse 10 mit offener Vorderseite auf. Dieses Gehäuse 10 hat von hinten bis vorn durchgehende Führungsnuten 12 an seinen beiden Innenseiten, in die seitlich nach außen abstehende Führungsstege 14 eines Schiebers 16 eingreifen. Über diese Geradführungen 12, 14 ist der Schieber 16 nach Art einer Schublade ausziehbar im Gehäuse 10 gelagert. Die offene Vorderseite des Gehäuses 10 bildet eine Ausziehöffnung 28 für den Schieber 16.

In seiner Oberseite weist das Gehäuse 10 eine von hinten bis fast nach vorn durchgehende, gerade Ausnehmung 18 auf, deren einer Seitenrand mit einem Zahnprofil 20 versehen ist. Oben auf einem hinteren Ende des Schiebers 16 ist ein Wickel 22 einer Rollfeder 24 drehbar gelagert. Ein abgewickeltes Ende 26 der Rollfeder 24 ist oben auf dem Gehäuse 10 nahe seiner Ausziehöffnung 28 angebracht. Die Rollfeder 24 wickelt sich selbst auf und bewegt den Schieber 16 in die ausgezogene, in den beiden Figuren dargestellte Stellung.

Um den Schieber 16 in einer in das Gehäuse 10 eingeschobenen Stellung zu arretieren, weist die erfindungsgemäße Halterung eine an sich bekannte Verriegelungseinrichtung mit einem Herzkurventeil 30 auf. Dieses ist schwenkbar in einer Ausnehmung 32 des Gehäuses 10 angeordnet, die sich oben seitlich an der Rückseite des Gehäuses 10 befindet. Das Herzkurventeil 30 wird von einer Feder 34 in seiner Mittelstellung gehalten. Ein in der Zeichnung nicht sichtbarer Verriegelungszapfen auf der Oberseite des Schiebers 16 gelangt beim Einschieben des Schiebers 16 in Eingriff mit dem Herzkurventeil 30 und verriegelt den Schieber 16. Wird der Schieber 16 durch Druck auf eine Blende 36 an seiner Vorderseite etwas in das Gehäuse 10 hineingedrückt, kommt der Verriegelungszapfen vom Herzkurventeil 30 frei und die Rollfeder 24 bewegt den Schieber 16 in die ausgezogene Stellung.

Ein Zahnrad eines ansich bekannten, in der Zeichnung nicht sichtbaren Flüssigkeits-Rotationsdämpfers, der an der Oberseite des Schiebers 16 angebracht ist, kämmt mit der Verzahnung 20 des Gehäuses 10 und dämpft die Verschiebebewegung des Schiebers 16.

Der Schieber 16 der erfindungsgemäßen Halterung weist eine kreisrunde Einstellöffnung 38 für einen nicht dargestellten Getränkebehälter, beispielsweise eine Getränkebüchse oder eine Tasse, in seiner Oberseite in seinem vorderen Bereich auf. Die Einstellöffnung 38 ist jedoch nicht als durchgehender Vollkreis ausgebildet, ein Umfangsabschnitt an einer Seite des Schiebers 16 fehlt. Auf diese Weise läßt sich der Schieber 16 so schmal wie oder schmaler als der Durchmesser der Einstellöffnung 38 ausbilden.

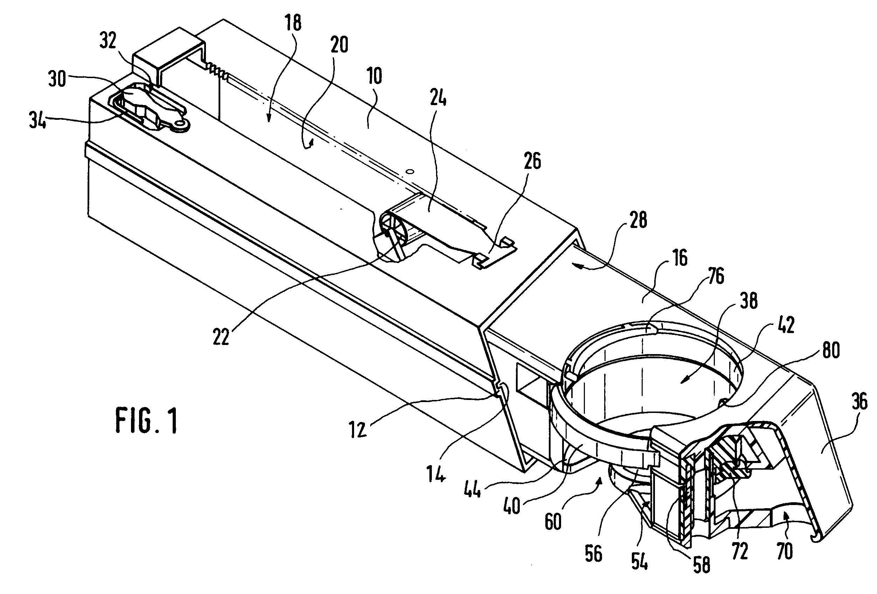

In der ausgezogenen Stellung des Schiebers 16 wird dessen Einstellöffnung 38 von einem Schwenkarm 40 geschlossen. Der Schwenkarm 40 ist schwenkbar an einem Schwenkteil 42 gelagert, das seinerseits schwenkbar am Schieber 16 angebracht ist. Eine in der Zeichnung nicht sichtbare Schraubentorsionsfeder drückt den Schwenkarm 40 seitlich aus dem Schieber 16 heraus in eine Stellung, in der er die Einstellöffnung 38 des Schiebers zu einem Vollkreis vervollständigt (Figur 1). In dieser Stellung läßt sich ein Getränkebehälter in die erfindungsgemäße Halterung einstellen. Der Getränkebehälter steht auf einem Abstellboden 44, der mit dem Schieber 16 einstückig ist.

Beim Einschieben des Schiebers 16 in das Gehäuse 10 gelangt der Schwenkarm 40 in Anlage an eine Seitenwand des Gehäuses 10 und wird von dieser nach innen gedrückt, so daß er seitlich nicht über den Schieber 16 vorsteht.

Soll ein zweiter Getränkebehälter in die erfindungsgemäße Halterung eingestellt werden, so kann das Schwenkteil 42 zur gleichen Seite wie der Schwenkarm 40 aus dem Schieber 16 herausgeschwenkt werden (Figur 2). Das Schwenkteil 42 weist eine zweite Einstellöffnung 46 auf. Diese Einstellöffnung 46 befindet sich bei in den Schieber 16 eingeschwenktem Schwenkte 42 deckungsgleich unter der Einstellöffnung 38 des Schiebers 16. Die Einstellöffnung 46 des Schwenkteils 42 ist ebenfalls unvollständig wie die Einstellöffnung 38 des Schiebers, ihr fehlt ebenfalls ein Umfangsabschnitt, der von dem mit dem Schwenkteil 42 mitschwenkenden Schwenkarm 40 geschlossen wird.

Der am Schwenkte 42 schwenkbar gelagerte Schwenkarm 40 weist eine Nase 48 an seinem freien Ende auf, mit der er von seiner Schraubentorsionsfeder von innen gegen eine die Einstellöffnung 46 bildende Wandung 50 des Schwenkteils 42 gedrückt wird und so die Einstellöffnung 46 des Schwenkteils 42 vervollständigt. Bei in den Schieber 16 eingeschwenktem Schwenkteil 42 vervollständigt der Schwenkarm 40 also sowohl die Einstellöffnung 38 des Schiebers 16 als auch die in dieser Stellung mit ihr deckungsgleiche Einstellöffnung 46 des Schwenkteils 42.

Bei aus dem Schieber 16 seitlich herausgeschwenktem Schwenkteil 42 vervollständigt ein kreisbogenförmiger Außenrand 52 des Schwenkteils 42 die Einstellöffnung 38 des Schiebers 16, so daß ein in den Schieber 16 eingestellter Getränkebehälter vollständig oder zumindest nahezu vollständig umfaßt wird.

Mit dem Schwenkteil 42 ist eine Stütze 54 drehfest verbunden, die mit dem Schwenkteil 42 mitschwenkt. Die Stütze 54 weist eine Abstellfläche 56 für einen in die Einstellöffnung 46 des Schwenkteils 42 eingestellten Getränkebehälter auf. Die Abstellfläche 56 befindet sich im Zentrum mit vertikalem Abstand unterhalb der Einstellöffnung 46 des Schwenkteils 42.

Die Stütze 54 ist um dieselbe Achse wie das Schwenkteil 42 schwenkbar am Schieber 16 gelagert. Der Schieber 16 weist einen Wendelantrieb 58 für die Stütze 54 auf, der die Stütze 54 beim Herausschwenken absenkt. Dadurch wird der vertikale Abstand zwischen Abstellfläche 56 und Einstellöffnung 46 vergrößert um einen sicheren Halt eines eingestellten Getränkebehälters bei niedriger Bauhöhe des Schiebers 16 zu gewährleisten.

Beim Einschwenken des Schwenkteils 42 in den Schieber 16 hebt der Wendelantrieb 58 die Stütze 54 wieder an. Sie gelangt in eine seitlich offene Ausnehmung 60 (Figur 1) des Abstellbodens 44 des Schiebers 16. Die Stütze 54 steht in eingeschwenkter Stellung nicht nach unten aus dem Schieber 16 vor.

Zum Verriegeln des Schwenkteils 42 in seiner in den Schieber 16 eingeschwenkten Stellung weist es eine Ausnehmung 62 an seiner Unterseite auf, in die bei eingeschwenktem Schwenkteil 42 eine Verriegelungsnase 64 (Figur 2) eingreift. Diese Verriegelungsnase 64 ist einstückig mit einem Hebel 66, der sich von der Blende 36 im Seitenbereich des Schiebers 16 nach innen erstreckt. Durch Ziehen an der Unterseite der Blende 36 wird das Schwenkteil 42 entriegelt und schwenkt federbetätigt nach außen. Die Blende 36 ist zu diesem Zweck um eine Schwenkwelle 68, die sich oben an der Vorderseite des Schiebers 16 befindet, schwenkbar. Eine Ausnehmung 70 an der Unterseite des Schiebers 16 vorn ermöglicht ein Hintergreifen der Blende 36 mit einem oder zwei Fingern von unten her, um die Blende 36 zur Entriegelung des Schwenkteils 42 nach vorn ziehen zu können.

Ein zweites Flüssigkeits-Rotationsdämpfungselement 72 ist im Schieber 16 angebracht. Sein Zahnrad kämmt mit einem in der Zeichnung nicht sichtbaren Zahnsegment des Schwenkteils 42 und dämpft dessen Schwenkbewegung.

Am Schieber 16 ist eine Andruckklappe 76 um zwei Schwenkzapfen 74 schwenkbar angebracht, die in die Einstellöffnung 38 ragt. Sie wird von zwei auf den Schwenkzapfen 74 aufgenommenen Schraubentorsionsfedern 78 von außen unten im Bogen um die Schwenkzapfen 74 nach innen oben in die Einstellöffnung 38 hineingedrückt. Die Andruckklappe 76 drückt einen eingestellten Getränkebehälter gegen die gegenüberliegende Seite der Einstellöffnung 38 und verbessert dadurch dessen Halt in der erfindungsgemäßen Halterung. Eine ebensolche Andruckklappe 80 ist in die Einstellöffnung 46 des Schwenkteils 42 ragend am Schwenkteil 42 angebracht.

## Patentansprüche

1. Halterung für zwei Getränkebehälter, mit einem schubladenartig ausziehbaren Schieber (16), der eine Einstellöffnung (38) und einen mit Abstand darunter befindlichen Abstellboden (44) für einen Getränkebehälter aufweist, und mit einem seitlich aus dem Schieber herausschwenkbaren Schwenkteil (42), das eine Einstellöffnung (46) und eine mit Abstand darunter befindliche Abstellfläche (56) für einen zweiten Getränkebehälter aufweist, wobei die beiden Einstellöffnungen (38, 46) bei in den Schieber (16) eingeschwenktem Schwenkteil (42) deckungsgleich übereinanderliegen und die beiden Einstellöffnungen (38, 46) eingestellte Getränkebehälter nur teilweise umgreifen, und wobei bei herausgeschwenktem Schwenkteil (42) ein Außenrand (52) des Schwenkteils (42) die Einstellöffnung (38) des Schiebers (16) vervollständigt, **dadurch gekennzeichnet**, daß die Halterung einen zur gleichen Seite wie das Schwenkteil (42) herausschwenkbaren Schwenkarm (40) aufweist, der bei eingeschwenktem Schwenkteil (42) die Einstellöffnung (38) des Schiebers (16) und bei herausgeschwenktem Schwenkteil (42) dessen Einstellöffnung (46) vervollständigt.

2. Halterung nach Anspruch 1, **dadurch gekennzeichnet,** daß der Schwenkarm (40) schwenkbar am Schwenkteil (42) gelagert ist.

3. Halterung nach Anspruch 1, **dadurch gekennzeichnet,** daß sie eine mit dem Schwenkteil (42) mitschwenkende Stütze (54) mit der Abstellfläche (56) für den zweiten Getränkebehälter aufweist, die sich beim Herausschwenken absenkt und beim Einschwenken in eine Ausnehmung (60) des Abstellbodens (44) des Schiebers (16) schwenkt.

4. Halterung nach Anspruch 3, **dadurch gekennzeichnet,** daß die Halterung einen Wendelantrieb (58) aufweist, der die Stütze (54) beim Herausschwenken des Schwenkteils (42) absenkt und beim Einschwenken des Schwenkteils (42) anhebt.

5. Halterung nach Anspruch 1, **dadurch gekennzeichnet,** daß sie eine Verriegelungseinrichtung (30) aufweist, die den Schieber (16) in einer eingeschobenen Stellung verriegelt, und daß die Halterung ein Federelement (24) aufweist, das den Schieber (16) in seine ausgezogene Stellung bewegt.

6. Halterung nach Anspruch 1, **dadurch gekennzeichnet,** daß sie eine Verriegelungseinrichtung (62, 64) aufweist, die das Schwenkteil (42) in seiner eingeschwenkten Stellung verriegelt.

7. Halterung nach Anspruch 6, **dadurch gekennzeichnet,** daß sie ein Federelement zum Herausschwenken des Schwenkteils (42) und/oder ein Federelement zum Herausschwenken des Schwenkarms (40) aufweist.

8. Halterung nach Anspruch 1, **dadurch gekennzeichnet,** daß der Schieber (16) und/oder das Schwenkteil (42) eine Andruckklappe (76, 80) aufweist, die von je einem Federelement (74) in die Einstellöffnungen (38, 46) gedrückt werden.

## Claims

1. Holder for two drinks containers, the holder having a slide element (16) that can be pulled out in the manner of a drawer, which slide element has an insertion opening (38) and, located underneath and spaced from the opening, a standing base (44) for a drinks container, and having a swivelling part (42) that can be swivelled sideways out of the slide element, which swivelling part has an insertion opening (46) and, located underneath and spaced from the opening, a standing surface (56) for a second drinks container, wherein the two insertion openings (38, 46) are coincident and superimposed one upon the other with the swivelling part (42) swivelled into the slide element (16), the two insertion openings (38, 46) engage only partly around drinks containers inserted therein and, with the swivelling part (42) swivelled out, an outer rim (52) of the swivelling part (42) completes the insertion opening (38) of the slide element (16), characterised in that the holder has a swivelling arm (40) that can be swivelled out on the same side as the swivelling part (42), which swivelling arm (40) completes the insertion opening (38) of the slide element (16) with the swivelling part (42) swivelled in and, with the swivelling part (42) swivelled out, completes the insertion opening (46) thereof.

2. Holder according to claim 1, characterised in that the swivelling arm (40) is swivel-mounted on the swivelling part (42).

3. Holder according to claim 1, characterised in that it has a support (54) having a standing surface (56) for the second drinks container, which support swivels together with the swivelling part and is lowered as it swivels outwards and on swivelling inwards swivels into an opening (60) of the standing base (44) of the slide element (16).

4. Holder according to claim 3, characterised in that the holder has a helical drive (58) that lowers the support (54) as the swivelling part (42) swivels out and raises it as the swivelling part (42) swivels in.

5. Holder according to claim 1, characterised in that it has a locking device (30) that locks the slide element (16) in its pushed-in position and the holder has a spring element (24) that moves the slide element (16) into its pulled-out position.

6. Holder according to claim 1, characterised in that it has a locking device (62, 64) that locks the swivelling part (42) in its swivelled-in position.

7. Holder according to claim 6, characterised in that it has a spring element for swivelling the swivelling part (42) out and/or a spring element for swivelling the swivelling arm (40) out.

8. Holder according to claim 1, characterised in that the slide element (16) and/or the swivelling part (42) has/have a contact flap (76, 80) that is urged into the insertion openings (38, 46) by a respective spring element (74).

## Revendications

1. Support pour deux récipients à boisson, comportant un coulisseau (16) que l'on peut sortir à la façon d'un tiroir et qui présente une ouverture de mise en place (38) et un fond de dépose (44), et qui s'y trouve par dessous à une certaine distance, pour un récipient à boisson, ainsi qu'une partie pivotante (42) qui peut pivoter latéralement pour sortir du coulisseau et présente une ouverture de mise en place (46) et une surface de dépose (56), qui s'y trouve par dessous à une certaine distance pour un second récipient à boisson, dans le cas duquel, la partie pivotante (42) ayant pivoté pour rentrer dans le coulisseau (16), les deux ouvertures de mise en place (38, 46) sont situées l'une au-dessus de l'autre en coïncidence et les deux ouvertures de mise en place (38, 46) n'entourent que partiellement les récipients à boisson mis en place, et dans le cas duquel, la partie pivotante (42) ayant pivoté pour sortir du coulisseau, un bord extérieur (52) de la partie pivotante (42) complète l'ouverture de mise en place (38) du coulisseau (16), caractérisé par le fait que le support présente un bras pivotant (42) qui, pour sortir, peut pivoter du même côté que la partie pivotante (42), qui, la partie pivotante (42) ayant pivoté pour rentrer dans le coulisseau, complète l'ouverture de mise en place (38) du coulisseau (16) et, la partie pivotante (42) ayant pivoté pour sortir du coulisseau, complète sa propre ouverture de mise en place (46).

2. Support selon la revendication 1, caractérisé par le fait que le bras pivotant (40) est porté sur la partie pivotante (42) avec liberté de pivotement.

3. Support selon la revendication 1, caractérisé par le fait que pour le second récipient à boisson, il présente un appui (54) avec surface de dépose (56) qui est entraîné en pivotement avec la partie pivotante (42), qui descend lors d'un pivotement vers l'extérieur et qui, lors d'un pivotement vers l'intérieur, pivote pour venir dans un évidement (60) du fond de dépose (44) du coulisseau (16).

4. Support selon la revendication 3, caractérisé par le fait que le support présente un mécanisme héliocoïdal (58) qui fait descendre l'appui (54) lors du pivotement de la partie pivotante (42) vers l'extérieur et le fait remonter lors du pivotement de la partie pivotante (42) vers l'intérieur.

5. Support selon la revendication 1, caractérisé par le fait qu'il présente un dispositif de verrouillage (30) qui verrouille le coulisseau (16) dans une position de fermeture et que le support présente un élément élastique (24) qui amène le coulisseau (16) dans sa position d'ouverture.

6. Support selon la revendication 1, caractérisé par le fait qu'il présente un dispositif de verrouillage (62, 64) qui verrouille la partie pivotante (42) dans sa position de pivotement vers l'intérieur.

7. Support selon la revendication 6, caractérisé par le fait qu'il présente un élément élastique pour faire pivoter la partie pivotante (42) vers l'extérieur et/ou un élément élastique pour faire pivoter le bras pivotant (40) vers l'extérieur.

8. Support selon la revendication 1, caractérisé par le fait que le coulisseau (16) et/ou la partie pivotante (42) présente un doigt de serrage (76, 80), doigts qui sont chacun poussés dans les ouvertures de mise en place (38, 46) par un élément élastique (74).
